# EUROPEAN PATENT SPECIFICATION

(11) **EP 4 322 271 B1**
(45) Date of publication and mention of the grant of the patent: **09.12.2026**
(21) Application number: 22785001.3
(22) Date of filing: 07.04.2022
(51) Int. Cl.: H01M 10/04, H01M 10/42, H01M 4/13, H01H 50/46

(54) **ELECTRODE ASSEMBLY AND BATTERY CELL**
ELEKTRODENANORDNUNG UND BATTERIEZELLE
ENSEMBLE ÉLECTRODE ET ÉLÉMENT DE BATTERIE

(30) Priority: 08.04.2021 KR 20210045993
(43) Date of publication of application: 14.02.2024
(73) Proprietor: LG Energy Solution, Ltd., Seoul 07335 (KR)
(72) Inventor: LEE, Byounggu, Daejeon 34122 (KR); RYU, Duk Hyun, Daejeon 34122 (KR)
(74) Representative: Goddar, Heinz J.
(86) International application number: PCT/KR2022/005064
(87) International publication number: WO 2022/216092

(56) References cited:
- JP-A- H0 582 113
- JP-B2- 5 174 314
- KR-A- 20050 118 579
- KR-A- 20120 086 270
- KR-A- 20150 071 250
- KR-A- 20180 080 908
- KR-A- 20200 134 672
- KR-A- 20200 134 672
- US-A1- 2006 073 380

## Description

### [Technical Field]

The present invention relates to an electrode assembly, a battery cell, a not claimed battery pack, and a not claimed vehicle.

### [Background Art]

A secondary battery that is easy to be applied according to product groups and has electrical characteristics, such as high energy density, is generally applied to an Electric Vehicle (EV) and a Hybrid Electric Vehicle (HEV) driven by an electric driving source, as well as portable devices.

The secondary battery is attracting attention as a new energy source for improving eco-friendliness and energy efficiency because secondary battery has not only the primary advantage of dramatically reducing the use of fossil fuels, but also the advantage that no by-products are generated from the use of energy.

The types of secondary batteries currently widely used include lithium ion batteries, lithium polymer batteries, nickel cadmium batteries, nickel hydride batteries, nickel zinc batteries, and the like. The operating voltage of the unit secondary battery cell is about 2.5 V to 4.5 V. Therefore, when a higher output voltage is required, a plurality of battery cells is connected in series to form a battery pack. In addition, according to the charge/discharge capacity required for the battery pack, a plurality of battery cells is connected in parallel to form a battery pack. Accordingly, the number of battery cells included in the battery pack and the type of electrical connection may be variously set according to a required output voltage and/or charge/discharge capacity.

On the other hand, as types of secondary battery cells, cylindrical, prismatic, and pouch-type battery cells are known. The battery cell may be a cylindrical battery cell. In the battery cell, a separation membrane that is an insulator is interposed between a positive electrode and a negative electrode, the positive electrode, the separation membrane, and the negative electrode are wound to form an electrode assembly in the form of a jelly roll, and the electrode assembly is inserted into a battery can together with an electrolyte to form a battery. In addition, a strip-shaped electrode tab may be connected to an uncoated portion of each of the positive electrode and the negative electrode, and the electrode tab electrically connects the electrode assembly and the externally exposed electrode terminal. For reference, the positive electrode terminal is a cap plate of a sealing body sealing an opening of the battery can, and the negative electrode terminal is the battery can.

However, according to the conventional battery cell having the foregoing structure, since current is concentrated in the strip-shaped electrode tab coupled to the uncoated portion of the positive electrode and/or the uncoated portion of the negative electrode, there are problems in that resistance is high, a lot of heat is generated, and current collection efficiency is not good.

For small cylindrical battery cells with a form factor of 18650 or 21700, resistance and heat are not a big issue. However, when the form factor is increased in order to apply the cylindrical battery cell to an electric vehicle, a problem may arise in that the cylindrical battery cell ignites as a lot of heat is generated around the electrode tab during the rapid charging process.

In order to solve the problem, a battery cell (so-called tab-less), according to claim 12 is disclosed, having a structure in which a positive electrode uncoated portion and a negative electrode uncoated portion are positioned at the top end and the bottom end of the jelly roll type electrode assembly, respectively, and a current collector plate is welded to the uncoated portions to improve current collecting efficiency is presented.

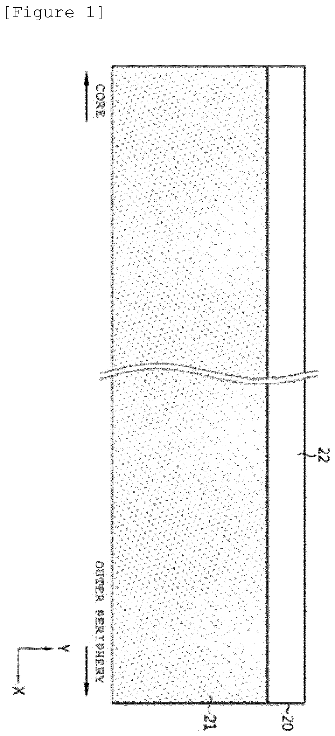

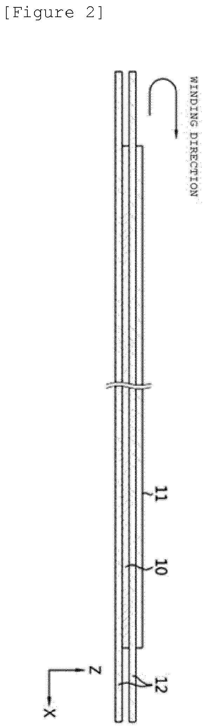

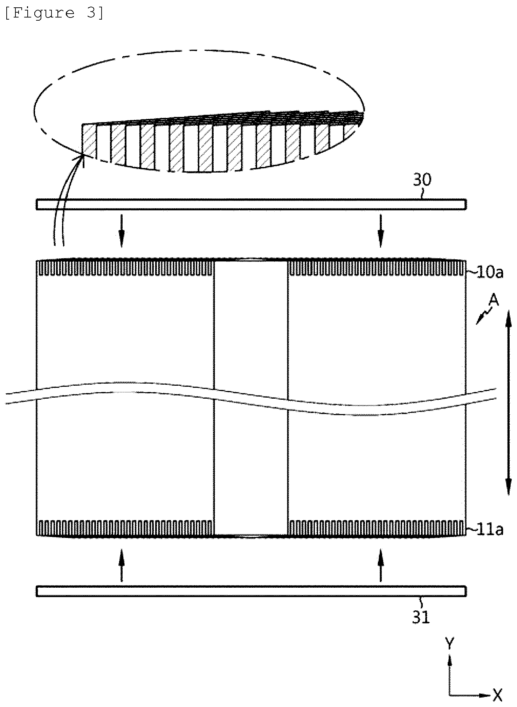

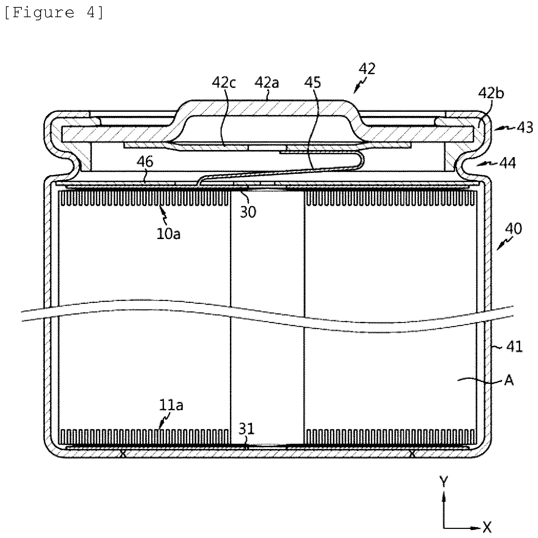

FIGS. 1 to 4 are diagrams illustrating a tab-less battery cell manufacturing process. FIG. 1 illustrates a structure of an electrode plate, FIG. 2 illustrates a winding process of the electrode plate, and FIG. 3 illustrates a process in which a current collector plate is welded to a curved surface of an uncoated portion. FIG. 4 is a cross-sectional view of the tab-less battery cell taken in a longitudinal direction Y.

A first electrode may be a negative electrode, a second electrode may be a positive electrode, and the negative electrode may include a negative electrode plate and the positive electrode may include a positive electrode plate.

Referring to FIGS. 1 to 4, each of a positive electrode plate 10 and a negative electrode plate 11 has a structure in which a sheet-shaped current collector 20 is coated with an active material 21, and includes an uncoated portion 22 at one long side in a winding direction X.

An electrode assembly A is manufactured by sequentially stacking the positive electrode plate 10 and the negative electrode plate 11 together with two separation membranes 12 as illustrated in FIG. 2 and winding them in one direction X. In this case, the uncoated portions of the positive electrode plate 10 and the negative electrode plate 11 are disposed at opposite directions to each other.

After the winding process, the uncoated portion 10a of the positive electrode plate 10 and the uncoated portion 11a of the negative electrode plate 11 are bent toward a core. Then, current collector plates 30 and 31 are welded to the uncoated portions 10a and 11a, respectively, to be coupled.

A separate electrode tab is not coupled to the positive electrode uncoated portion 10a and the negative electrode uncoated portion 11a , the current collector plates 30 and 31 are connected to external electrode terminals, and the current path is formed with a large cross-sectional area along the winding axis direction (see the arrow) of the electrode assembly A, so that there is an advantage in that the resistance of the battery cell may be lowered. This is because resistance is inversely proportional to the cross-sectional area of the path through which the current flows.

However, as the form factor of the cylindrical battery cell increases and the size of the charging current during rapid charging increases, the heat problem also occurs again in the tab-less battery cell.

In particular, the tab-less battery cell 40 in the related art includes a battery can 41 and a sealing body 42 as illustrated in FIG. 4. The sealing body 42 includes a cap plate 42a, a sealing gasket 42b, and a connecting plate 42c. The sealing gasket 42b surrounds the edge of the cap plate 42a and is fixed by the crimping portion 43. Further, the electrode assembly A is fixed in the battery can 41 by a beading portion 44 in order to prevent vertical flow.

Typically, the positive electrode terminal is the cap plate 42a of the sealing body 42 and the negative electrode terminal is the battery can 41. Therefore, the current collector plate 30 coupled to the uncoated portion 10a of the positive electrode plate 10 is electrically connected to the connection plate 42c attached to the cap plate 42a through a strip-shaped lead 45. Further, the current collector plate 31 coupled to the uncoated portion 11a of the negative electrode plate 11 is electrically connected to the bottom of the battery can 41. An insulator 46 covers the current collector plate 30 to prevent the battery can 41 and the uncoated portion 10a of the positive electrode plate 10 having different polarity from contacting each other and causing a short circuit.

When the current collector plate 30 is connected to the connecting plate 42c, the lead 45 in the form of a strip is used. The lead 45 is separately attached to the current collector plate 30 or manufactured integrally with the current collector plate 30. However, since the lead 45 is in the form of a thin strip, the cross-sectional area is small, so that when a rapid charging current flows, a lot of heat is generated. Further, excessive heat generated from the lead 45 is transferred to the electrode assembly A to contract the separation membrane 12 to cause an internal short circuit, which is a major cause of thermal runaway.

In addition, in order to connect the tab-less battery cells 40 in the related art in series and/or in parallel, it is necessary to connect the bus bar components to the cap plate 42a of the sealing body 42 and the bottom surface of the battery can 41, so that the space efficiency decreases. A battery pack mounted on an electric vehicle includes hundreds of battery cells 40. Accordingly, the inefficiency of the electrical wiring causes considerable inconvenience in the assembly process of the electric vehicle and maintenance of the battery pack.

The document KR 2020 0134 672 A discloses a jelly-roll type electrode assembly in which a coating portion of an electrode and a separator are bonded in a core region.

The document KR 2015 0071 250 A discloses a jelly-roll type electrode assembly including different types of separators, specifically a dry separator and a wet separator.

The document JP 5 174 314 B2 discloses a battery electrode assembly including taping applied to a non-coated portion and configured to prevent separator shrinkage.

### [Detailed Description of the Invention]

### [Technical Problem]

A technical problem of the present invention is to provide an electrode assembly in which an electrode of an electrode assembly has a fixing part fixed to a separation membrane, to prevent the separation membrane from being contracted due to a high temperature even without a structure in which a negative electrode tab is coupled to a core region of the electrode assembly.

Another technical problem of the present invention is conceived under the background of the related art, and is to reduce internal resistance of a battery cell and increase energy density by improving an electrode terminal structure of the battery cell and improving space efficiency within a battery can.

Another technical problem of the present invention is to improve an internal heating problem occurring during rapid charging by enlarging a cross-sectional area of a current path by improving an electrode terminal structure of a battery cell.

Another technical problem of the present invention is to provide a battery cell, according to claim 12, with an improved structure in which electrical wiring for series and/or parallel connection of battery cells may be performed at one side of the battery cell.

Another technical problem of the present invention is to provide a battery pack, not forming part of the claimed invention, manufactured by using the battery cell with the improved structure, and a vehicle including the same.

However, the technical problems to be solved by the present invention are not limited to the above problems, and other problems not mentioned will be clearly understood by those skilled in the art from the description of the invention described below.

### [Technical Solution]

An exemplary embodiment of the present invention provides an electrode assembly according to claim 1 in which a first electrode, a separation membrane, and a second electrode are stacked and wound, in which at least one of the first electrode and the second electrode includes a current collector and an electrode active material layer provided on the current collector, and the first electrode includes a fixing part which is provided on the electrode active material layer, provided to an edge portion closest to a winding center of the electrode assembly, and is fixed to at least a part of the separation membrane.

Another exemplary embodiment of the present invention provides a battery cell including: the electrode assembly according to the foregoing exemplary embodiment; a battery can which accommodates the electrode assembly and has an opening at one side; an electrode terminal riveted through a through-hole formed in a bottom of the battery can; a gasket provided between the electrode terminal and an outer diameter of the through-hole; and a sealing body sealing the opening of the battery can.

Still another exemplary embodiment of the present invention provides a battery pack including the battery cell according to the foregoing exemplary embodiment.

Yet another exemplary embodiment of the present invention provides a vehicle, not forming part of the claimed invention, including the battery pack, not forming part of the claimed invention, according to the foregoing exemplary embodiment.

### [Advantageous Effects]

In the battery cell, when the outer diameter of the electrode assembly is small, there is no great difficulty in discharging internal heat to the outside, but in a battery cell requiring high capacity and high output, as the outer diameter of the electrode assembly increases, the rate at which heat escapes outward from a core becomes slower.

As such, when heat does not escape from the core well, contraction of the separation membrane may occur due to a high temperature in the core portion due to a decrease in the heat discharge rate, and this may cause a situation in which the separation membrane does not perform a normal function between the positive electrode and the negative electrode.

In the case of a cylindrical battery cell, a negative electrode tab may be coupled to the core portion, and in this case, even if the separation membrane in the core is thermally damaged and contracted, the negative electrode tab may function to physically fix the separation membrane.

However, an electrode assembly to which the negative electrode tab, which may physically impede the contraction of the separation membrane, is not applied, may be vulnerable to problems caused by the contraction of the separation membrane.

According to one aspect of the present invention, the fixing part fixed to the separation membrane is provided to the electrode of the electrode assembly, so that it is possible to prevent the separation membrane from being contracted due to a high temperature even without the structure in which the negative electrode tab is coupled to the core region of the electrode assembly.

According to one aspect of the present invention, by solving the above high temperature safety problem, the size of the battery cell may be increased, which may be realized by improving the electrode terminal structure of the battery cell to increase the space efficiency in the battery can to lower the internal resistance and increase the energy density.

### [Brief Description of Drawings]

The following drawings attached to the present specification illustrate exemplary embodiments of the present invention.
FIG. 1 is a top plan view illustrating a structure of an electrode plate used in a tab-less battery cell in the related art.
FIG. 2 is a diagram illustrating a winding process of an electrode assembly included in the tab-less battery cell in the related art.
FIG. 3 is a diagram illustrating a process in which a current collector plate is welded to a bent surface of an uncoated portion of the electrode assembly of FIG. 2.
FIG. 4 is a cross-sectional view of the tab-less battery cell in the related art taken in a longitudinal direction Y.
FIG. 5 is a diagram illustrating an unwinding state of an electrode assembly according to an exemplary embodiment of the present invention.
FIG. 6 is a front view illustrating the electrode assembly of FIG. 5.
FIG. 7 is a top plan view illustrating the electrode assembly of FIG. 5.
FIG. 8 is a cross-sectional view illustrating a riveting structure of an electrode terminal, not forming part of the claimed invention.
FIG. 9 is an enlarged cross-sectional view of a portion indicated by a dotted circle in FIG. 8.
FIG. 10 is a cross-sectional view of a battery cell taken in a longitudinal direction Y according to the exemplary embodiment of the present invention.
FIG. 11 is a top plan view illustrating an example of a structure of an electrode plate, not forming part of the claimed invention.
FIG. 12 is a cross-sectional view of the electrode assembly in which an uncoated portion segmental structure of the electrode plate is applied to a first electrode plate and a second electrode plate taken in the longitudinal direction Y according to the exemplary embodiment of the present invention.
FIG. 13 is a cross-sectional view of the electrode assembly in which an uncoated portion is bent taken in the longitudinal direction Y according to the exemplary embodiment of the present invention.
FIG. 14 is a diagram illustrating a schematic configuration of a battery pack, not forming part of the claimed invention, including battery cells according to an exemplary embodiment of the present invention.
FIG. 15 is a diagram illustrating a schematic configuration of a vehicle, not forming part of the claimed invention, including the battery pack, not forming part of the claimed invention.

### <Explanation of Reference Numerals and Symbols>

0: Winding center
1: Electrode assembly in unwinding state
2: First electrode
3: Second electrode
4: First separation membrane
5: Second separation membrane
6: Edge portion closest to winding center of electrode assembly
7: Fixing part
7W: Width of fixing part
8: First electrode uncoated portion
9: Second electrode uncoated portion
10: Positive electrode plate
10a: Uncoated portion of positive electrode plate
11: Negative electrode plate
11a: Uncoated portion of negative electrode plate
12: Separation membrane
20: Current collector
21: Active material
22: Uncoated portion
30, 31: Current collector plate
40: Tab-less battery cell
41: Battery can
42: Sealing body
42a: Cap plate
42b: Sealing gasket
42c: Connection plate
43: Crimping portion
44: Beading portion
45: Lead
46: Insulator
50: Electrode terminal
50a: Body portion
50b: Outer flange portion
50c: Inner flange portion
50d: Flat portion
51: Cylindrical battery can with opened one side
51a: Inner peripheral surface of lateral wall of battery can
52: Bottom
52a: Outer surface
52b: Inner surface
53: Through-hole
54: Gasket
54a: Outer gasket portion
54b: Inner gasket portion
55: Recess portion
55a: Lateral wall of flat portion
55b: Inclined surface of inner flange portion
56: Inner edge of through-hole
57: Facing surface facing inner flange portion
70: Battery cell
71: Electrode assembly
72: Uncoated portion of first electrode plate
73: Uncoated portion of second electrode plate
74: Sealing body
74a: Cap plate
74b: Sealing gasket
75: Crimping portion
76: Beading portion
76a: Inner peripheral surface of beading portion
77: Vent notch
78: First current collector plate
78a: Edge of first current collector plate
79: Second current collector plate
79a: Center
80: Winding center
80': Insulation cap
80a: Welding hole
90: Electrode plate
91: Current collector
92: Active material layer
93: Uncoated portion
93': Core-side uncoated portion
93a: Segment piece
94: Insulating coating layer
100: Electrode assembly
101: Bent portion
102: Bent surface
200: Battery pack
201: Cylindrical battery cell
202: Pack housing

### [Best Mode]

Hereinafter, an exemplary embodiment of the present invention will be described in detail with reference to the accompanying drawings. Terms or words used in the present specification and the claims shall not be interpreted to be limited as general or lexical meanings, and on the principle that the inventor can appropriately define a concept of a term for describing the invention by the best method.

Therefore, the exemplary embodiment described in the present specification and the configuration illustrated in the drawing are simply the exemplary embodiments of the present invention, and thus it should be understood that there are various equivalents and modification examples substitutable with the exemplary embodiment described in the present specification and the configuration illustrated in the drawing at the time of filing the present invention.

Throughout the specification, when a part "includes" other constituent elements, this means that other constituent elements may be further included, rather than excluding other constituent elements, unless otherwise stated.

In addition, the term "- unit" described in the specification means a unit for processing at least one function and operation. Further, throughout the specification, "A to B" means A or more and B or less, and means a numerical range including both A and B. Hereinafter, an exemplary embodiment of the present invention will be described with reference to the drawings.

Further, for helping the understanding of the invention, the accompanying drawings are not illustrated according to an actual scale, but sizes of some of the constituent elements may be exaggerated and illustrated. Further, the same reference numbers may be assigned to the same components in different constituent elements.

Hereinafter, an exemplary embodiment of the present invention will be described with reference to the drawings.

An exemplary embodiment of the present invention provides an electrode assembly in which a first electrode 2, separation membranes 4 and 5, and a second electrode 3 are stacked and wound, and at least one of the first electrode 2 and the second electrode 3 includes a current collector 91 and an electrode active material layer 92 provided on the current collector, and the first electrode has a fixing part 7 provided to the electrode active material layer 92, provided to an edge portion 6 closest to a winding center of the electrode assembly, and fixed to at least a part of the separation membranes 4 and 5.

The electrode active material layer 92 may be provided on the current collector 91 of the electrode while being coated.

According to an example, the first electrode 2 may be provided larger than the second electrode 3, and the first electrode active material layer may be provided larger than the second electrode active material layer.

The fixing part 7 may be provided to the electrode active material layer 92, and may be provided to the edge portion 6 closest to the winding center of the electrode assembly.

The fixing part 7 includes an uncoated portion in which the electrode active material layer is not provided, in order to make the uncoated portion, price competitiveness may decrease. The fixing part 7 is provided to the electrode active material layer 92, so that it is advantageous in price competitiveness and in preventing contraction of the separation membrane due to a high temperature.

The winding center refers to a position where the stacked electrode and the separation membrane start to be wound, and may be provided in a core region of the electrode assembly.

The edge portion 6 closest to the winding center refers to a portion provided on the winding center side among the two edge portions provided in a winding axis direction of the electrode.

The separation membrane 4 may be provided between the first electrode 2 and the second electrode 3, and at least a part of the separation membrane 4 may be fixed to the fixing part 7. Since the separation membrane 4 is fixed to the fixing part 7, so that it is possible to prevent the separation membrane from being contracted due to a high temperature even in the electrode assembly having no structure in which a negative electrode tab is coupled.

Further, it is possible to increase a size of a battery cell by solving the high temperature safety problem, this may be realized by improving the electrode terminal structure of the battery cell to increase the space efficiency within the battery can, lower the internal resistance, and increase the energy density.

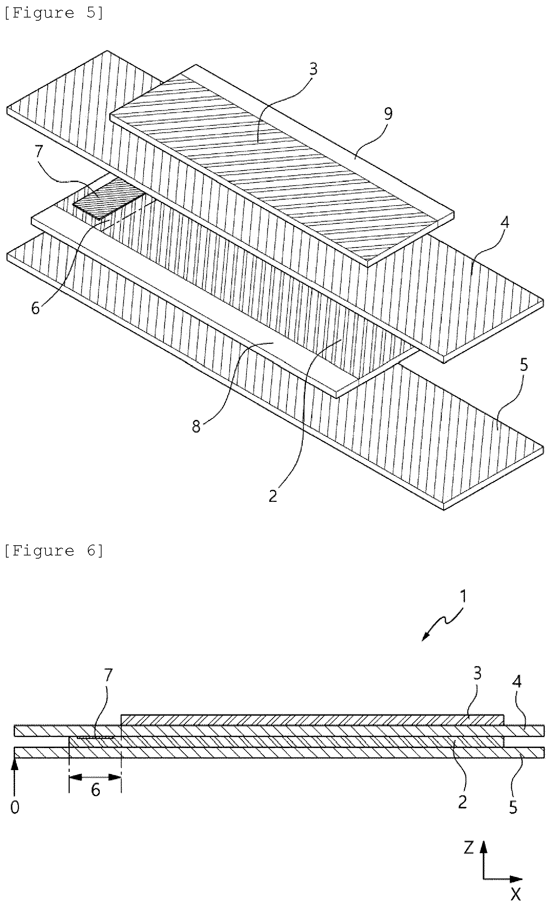

FIG. 5 is a diagram illustrating an unwinding state 1 of the electrode assembly according to an exemplary embodiment of the present invention.

Referring to FIG. 5, in the electrode assembly according to the exemplary embodiment of the present invention, the first electrode 2, the separation membranes 4 and 5, and the second electrode 3 are stacked and in the unwinding state 1, and the separation membranes 4 and 5 may include the first separation membrane 4 and the second separation membrane 5. Preferably, the first electrode 2 needs to be larger than the second electrode 3, and the separation membranes 4 and 5 need to be larger than the first electrode 2 and the second electrode 3. Herein, the "larger" means that the electrode and the separation membrane may be provided longer in the longitudinal direction of the electrode assembly perpendicular to the winding axis.

The fixing part 7 is provided to an active material layer of the first electrode and is provided to the edge portion 6 closest to the winding center of the electrode assembly to be fixed to at least a part of the separation membrane 4 and 5.

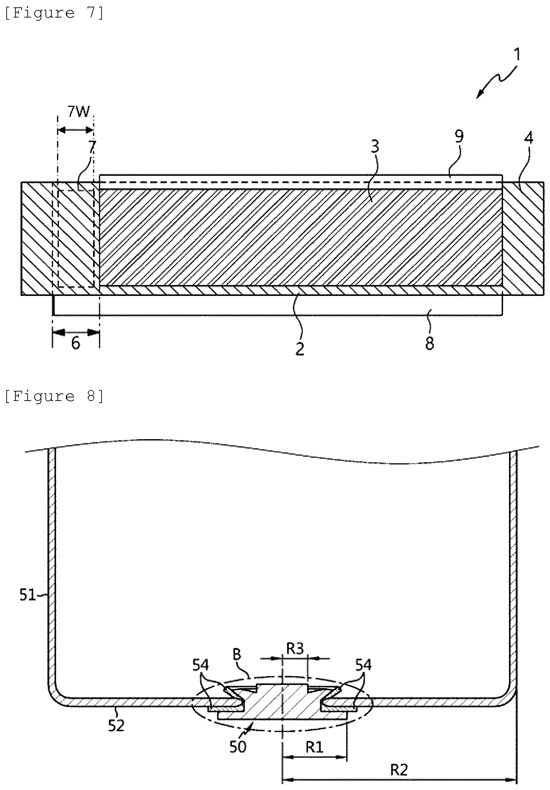

FIGS. 6 and 7 are a front view and a top plan view illustrating the electrode assembly of FIG. 5, respectively.

Referring to FIGS. 6 and 7, an example of the unwinding state 1 of the electrode assembly according to the exemplary embodiment of the present invention is illustrated, and the fixing part 7 is provided to the edge portion 6 of the active material layer closest to the winding center of the electrode assembly in the unwinding state 1, and the fixing part 7 is fixed so as not to be separated from the part of the separation membranes 4 and 5.

The electrode assembly includes uncoated portions 8 and 9 which are not provided with the active material layer, and the uncoated portions 8 and 9 are provided to the edge portion of the current collector provided to one end of the winding axis of the electrode assembly.

The uncoated portions 8 and 9 may be provided at one end of the winding axis of the electrode assembly in the first electrode 2 and the second electrode 3. According to the example, the uncoated portions 8 and 9 may be extended from both ends of the electrode assembly and exposed. Preferably, the uncoated portion 8 of the first electrode and the uncoated portion 9 of the second electrode may be provided to both ends of the electrode assembly in opposite directions, respectively (See FIG. 7).

The uncoated portions 8 and 9 are extended from both ends of the electrode assembly and exposed to be electrically connected with current collector plates 78 and 79, so that it is possible to reduce internal resistance and increase energy density, and prevent the separation membrane from being contracted due to a high temperature even without a structure in which a tab or a lead is coupled to the electrode assembly.

The electrode active material layer 92 may be provided in a region except for the uncoated portion 8 and 9. According to the example, the electrode active material layer 92 may be provided in a region except for an edge portion in which the uncoated portion is provided in the edge portion of the current collector. Further, the electrode active material layer 92 cannot be extended from both ends of the electrode assembly or exposed, and the first electrode active material layer and the second electrode active material layer do not overlap each other due to the separation membrane 4 interposed therebetween.

According to the exemplary embodiment, the separation membranes 4 and 5 include the first separation membrane 4 provided between the first electrode 2 and the second electrode 3 and the second separation membrane 5 provided to a surface opposite to a surface facing the first separation membrane of the first electrode, and at least one of the first separation membrane 4 and the second separation membrane 5 is fixed to the fixing part 7.

According to the example, the first separation membrane 4 is provided between the first electrode 2 and the second electrode 3 to be fixed to the fixing part 7, and the second separation membrane 5 may be provided to the surface opposite to the surface facing the first separation membrane 4 of the first electrode 2 to be fixed to the fixing part 7.

The fixing part 7 may be provided to one side of the first electrode 2 and fixed to the first separation membrane 4, or may be provided to the other side of the first electrode 2 and fixed to the second separation membrane 5. Preferably, the fixing part 7 may also be provided to one side and the other side of the first electrode 2 to be fixed to the first separation membrane 4 and the second separation membrane 5.

The electrode of the electrode assembly is provided with the fixing part 7 fixed to the separation membranes 4 and 5, thereby preventing the separation membrane from being contracted due to a high temperature.

Further, the fixing part 7 provided to one side and/or the other side of the first electrode 2 is fixed to the first separation membrane 4 and the second separation membrane 5, so that it is possible to increase a size of the battery cell, and it is possible to effectively prevent the separation membrane from being contracted due to a high temperature even in the foregoing battery cell.

According to the exemplary embodiment, the fixing part 7 does not overlap the second electrode 3 in the unwinding state 1 of the electrode assembly.

The unwinding state 1 of the electrode assembly is the state in which the first electrode 2, the separation membrane 4, and the second electrode 3 are stacked, and the first electrode 2 may be provided to be larger than the second electrode 3. The feature that the first electrode 2 is provided to be larger than the second electrode 3 means that the first electrode 2 is provided to be longer than the second electrode 3 in the longitudinal direction Y of the electrode assembly that is perpendicular to the winding axis. In this case, the separation membrane 4 needs to be provided to be longer than the first electrode 2 and the second electrode 3.

The fixing part 7 may be provided to the edge portion 6 closest to the winding center of the electrode assembly, and referring to FIG. 6, the fixing part 7 may be provided not to overlap the second electrode 3 in the stacking state of the electrode assembly.

The fixing part 7 does not overlap the second electrode 3, thereby preventing the separation membrane from being damaged during the charging of the electrode assembly and preventing the reduction in battery life.

According to the exemplary embodiment, a width 7W of the fixing part may be 12 mm or less, 11.5 mm or less, 11 mm or less, 10.5 mm or less, or 10 mm or less. Further, the width 7W of the fixing part may be 2 mm or more, 3 mm or more, or 4 mm or more. The width 7W of the fixing part may be fixed to the separation membranes 4 and 5 in the foregoing range, and prevent the separation membrane from being contracted even at a high temperature. According to the example, the width 7W of the fixing part may be 15% to 65% of the outer peripheral surface of a winding center 80. The width 7W of the fixing part may be 15% or more, 20% or more, 25% or more, 30% or more, or 35% or more of the outer peripheral surface of a winding center 80. The width 7W of the fixing part may be 65% or less, 60% or less, 55% or less, 50% or less, or 45% less of the outer peripheral surface of a winding center 80.

The outer peripheral surface of the winding center 80 may be differently set depending on a size of the battery, and accordingly, the width 7W of the fixing part is fixed to the separation membranes 4 and 5 in the forgoing range to prevent the separation membrane from being contracted at a high temperature.

The width 7W of the fixing part means a length of a portion that does not overlap the second electrode 3 in the unwinding state 1 of the electrode assembly. The fixing part 7 may be fixed to the separation membranes 4 and 5 in the range within the width 7W of the fixing part, and accordingly, it is possible to prevent the separation membrane from being contracted at a high temperature.

According to the example, the portion except for the fixing part 7, the first electrode 2, the separation membranes 4 and 5, and the second electrode 3 may not be fixed (see FIG. 6). Therefore, the winding may be easy by suppressing the occurrence of wrinkles during winding.

The first electrode 2 may be a negative electrode and the second electrode 3 may be a positive electrode.

According to the exemplary embodiment, the fixing part 7 may be a lamination tape. The lamination tape may be a tape having an adhesive layer that may be laminated on at least one surface, and may be a tape having adhesive layers that may be laminated on both surfaces.

The lamination means having adhesive force at a high temperature, and making the lamination tape be soft by applying heat to the adhesive layer of the lamination tape to have adhesive force.

The lamination tape may be fixed to at least a part of the separation membranes 4 and 5.

The fixing part 7 is not limited in size, shape or type as long as the fixing part 7 is fixed to the separation membrane, and may be, for example, a double-sided tape. According to the example, both sides of the double-sided tape may have adhesive force, and the double-sided tape may be fixed by adhering to at least a part of the separation membrane.

According to the exemplary embodiment, a thermal decomposition temperature of the lamination tape may be 180°C or more, 190°C or more, 200°C or more, 210°C or more, 220°C or more, 230°C or more, or 240°C or more. The thermal decomposition temperature of the lamination tape may be 320°C or less, 310°C or less, 300°C or less, 290°C or less, 280°C or less, or 270°C or less.

The thermal decomposition temperature of the lamination tape may be set differently depending on the type of substrate, and when the above range is satisfied, since the thermal decomposition temperature of the lamination tape is higher than the melting point of the separation membrane, the lamination tape is fixed to the separation membrane until the separation membrane is melted, thereby preventing the separation membrane from being contracted.

According to an example not forming part of the present invention, adhesive force at room temperature of the lamination tape may be 20 gf/100 mm to 40 gf/100 mm, 23 gf/100 mm to 37 gf/100 mm, or 25 gf/100 mm to 35 gf/100 mm. For example, the adhesive force at room temperature of the lamination tape may be 20 gf/100 mm or more, 23 gf/100 mm or more, 25 gf/100 mm or more, 27 gf/100 mm or more, or 29 gf/100 mm or more. The adhesive force at room temperature of the lamination tape may be 40 gf/100 mm or less, 37 gf/100 mm or less, 35 gf/100 mm or less, 33 gf/100 mm or less, or 31 gf/100 mm or less. When the foregoing range is satisfied, the lamination tape is fixed to the separation membranes 4 and 5 to prevent the separation membrane from being contracted due to a high temperature.

According to the example, the lamination tape has adhesive force at a predetermined temperature or higher. Having the adhesive force at the predetermined temperature or higher means making the lamination tape be soft by applying heat to the adhesive layer of the lamination tape to have adhesive force, and the adhesive force may be adjusted in consideration of electrode fairness. In this case, the lamination tape may have larger adhesive force than room-temperature adhesive force, and is fixed to the separation membranes 4 and 5 to prevent the separation membrane from being contracted at a high temperature.

The lamination tape may have adhesive force at about 40°C or more, 45°C or more, 50°C or more, 55°C or more, 60°C or more, or 65°C or more. According to the example, preferably, the lamination tape may have adhesive force at about 50°C or more, more preferably, 60°C or more. When the foregoing range is satisfied, the adhesive force of the lamination tape may be exhibited, and this is advantageous because it is possible to set a temperature range at which the fixing part 7 is fixed to the separation membranes 4 and 5 in the battery cell process.

According to an example not forming part of the present invention, a change rate of the adhesive force of the lamination tape may satisfy Equation 1 below. [Equation 1] $0.8 \leq \left[x1/x2\right] \times 100 \left(%\right) \leq 1.2$

In Equation 1, X1 is the adhesive force of the lamination tape when the lamination tape is left at 23°C for 20 minutes, and X2 is the adhesive force of the lamination tape when the lamination tape is stored at 65°C for 20 minutes after being left at 23°C for 20 minutes.

X1 is the adhesive force of the lamination tape when the lamination tape is left at 23°C for 20 minutes, and may be the adhesive force of the lamination tape at room temperature. X2 is the adhesive force of the lamination tape when the lamination tape is stored at 65°C for 20 minutes after being left at 23°C for 20 minutes, and may be the adhesive force of the lamination tape after the lamination.

The lamination means making the lamination tape be soft by applying heat to the adhesive layer of the lamination tape to have adhesive force, and may be performed by a lamination process.

In the foregoing range, the lamination tape may maintain adhesive force even before and after the lamination, and may be fixed to the separation membranes 4 and 5 to prevent the separation membrane from being contracted due to a high temperature.

For a method of measuring adhesive force of the lamination tape according to an example not forming part of the present invention, X1 means the adhesive force of the lamination tape when the lamination tape is left at 23°C for 20 minutes, and after the adhesive layer of the lamination tape is pressed on the SUS304 substrate by reciprocating a 2 kg rubber roller once and is left at 23°C for 20 minutes, a backplate film from the colored polyimide may be measured by using a texture analyzer (Stable Micro Systems) at an angle of 180° and a peeling rate of 300 mm/min.

Further, X2 is the adhesive force of the lamination tape when the lamination tape is stored at 65°C for 20 minutes after being left at 23°C for 20 minutes, and after the adhesive layer of the lamination tape is pressed on the SUS304 substrate by reciprocating a 2 kg rubber roller once and is left at 23°C for 20 minutes and then is stored at 65°C for 20 minutes, a backplate film from the colored polyimide may be measured by using a texture analyzer (Stable Micro Systems) at an angle of 180° and a peeling rate of 300 mm/min.

According to the exemplary embodiment, the fixing part 7 is fixed to at least a part of the separation membrane at two points provided at the edge portion facing each other in the winding axis direction of the electrode assembly, and one point provided between the two points. The two points and the one point in the fixing part 7 may be minimum portions to be fixed to the separation membranes 4 and 5, and as long as the fixing part 7 is fixed to the separation membrane, the fixing part 7 is not limited in size and form.

According to the example, three points including the two points and the one point are provided within the fixing part 7, and even if a portion including three or more spaced portions or a portion formed of an area that is not spaced is fixed to the separation membranes 4 and 5, the portion is not particularly limited in position and area.

According to the exemplary embodiment, the fixing part 7 may be fixed to the separation membrane by 40% or more, 50% or more, or 60% or more of the length of the electrode assembly in the winding axis direction. Within the foregoing range, the fixing part 7 may be fixed to the separation membranes 4 and 5 without separation, and the separation membrane may be prevented from being contracted at a high temperature.

The length of the electrode assembly in the winding axis direction may be a length of the edge portion in the winding axis direction or may be a length between edge portions facing each other in the winding axis direction of the electrode assembly. Further, 40% or more of the length of the electrode assembly in the winding axis direction may be a continuous length range or a non-continuous length range.

An exemplary embodiment of the present invention provides a battery cell 70 including: an electrode assembly, according to claims 1-11, 71; a battery can 51 which accommodates the electrode assembly and has an opening at one side; an electrode terminal 50 riveted through a through-hole formed on a bottom of the battery can; a gasket 54 provided between the electrode terminal and an outer diameter of the through hole; and a sealing body 74 sealing the opening of the battery can. For example, the electrode terminal riveted in the bottom of the battery can may have a riveting structure.

The battery cell 70 includes the electrode assembly 71 according to the exemplary embodiment of the present invention, so that it is possible to prevent the separation membrane from being contracted due to a high temperature and solve a high-temperature safety problem to increase a size of the battery cell 70.

Further, space efficiency within the battery can 51 is improved by improving the structure of the electrode terminal of the battery cell 70 to reduce internal resistance and increase energy density, thereby implementing an increase in the size of the battery cell 70.

According to the exemplary embodiment, the first electrode 2 is electrically connected with the battery can 51 and the second electrode 3 is electrically connected with the electrode terminal 50, and the sealing body 74 can be insulated from the battery can 51.

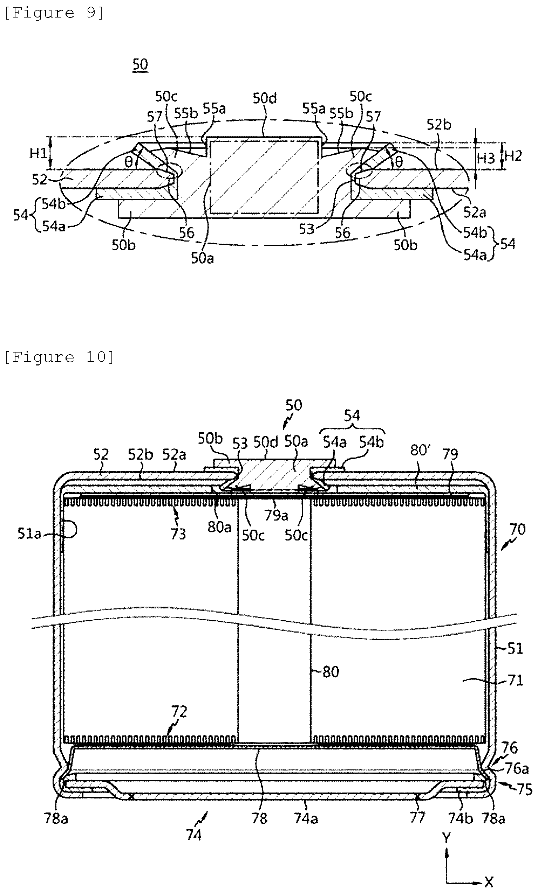

FIG. 8 is a cross-sectional view illustrating a riveting structure of the electrode terminal 50, not forming part of the claimed invention. and FIG. 9 is an enlarged cross-sectional view of a portion indicated by a dotted circle.

Referring to FIGS. 8 and 9, the riveting structure of the electrode terminal 50, not forming part of the claimed invention, may include the cylindrical battery can 51 having an one side opened, the electrode terminal 50 riveted through the through-hole 53 formed in a bottom 52 of the battery can 51, and the gasket 54 provided between the electrode terminal 50 and the outer diameter of the through-hole 53.

The battery can 51 is made of a conductive metal material. In one example, the battery can 51 may be made of a steel material, and the present invention is not limited thereto.

The electrode terminal 50 is made of a conductive metal material. In one example, the electrode terminal 50 may be made of aluminum, and the present invention is not limited thereto.

The gasket 54 may be made of a polymer resin having an insulating property and elasticity. In one example, the gasket 54 may be made of polypropylene, polybutylene terephthalate, polyethylene fluoride, and the like, and the present invention is not limited thereto.

Preferably, the electrode terminal 50 may include a body portion 50a inserted into the through-hole 53, an outer flange portion 50b extended along an outer surface 52a from the circumference of one side of the body portion 50a exposed through the outer surface 52a of the bottom 52 of the battery can 51, an inner flange portion 50c extended toward an inner surface 52b from the circumference of the other side of the body portion 50a exposed through the inner surface 52b of the bottom 52 of the battery can 51, and a flat portion 50d provided inside the inner flange portion 50c.

Preferably, the flat portion 50d and the inner surface 52b of the bottom 52 of the battery can 51 may be parallel to each other. Here, 'parallel' means substantially parallel when observed with the naked eye.

According to one aspect, an angle θ between the inner flange portion 50c and the inner surface 52b of the bottom 52 of the battery can 51 may be 0° to 60° or less. A size of the angle may be determined by caulking strength when the electrode terminal 50 is installed in the through-hole 53 of the battery can 51 by a caulking method. In one example, as the caulking strength increases, the angle θ may decrease to 0°. When the angle exceeds 60°, a sealing effect of the gasket 54 may deteriorate.

According to one aspect, a recess portion 55 may be provided between the inner flange portion 50c and the flat portion 50d. The recess portion 55 may have a cross-sectional structure of an asymmetric recess. In one example, the asymmetric recess may be approximately V-shaped. The asymmetric recess may include a lateral wall 55a of the flat portion 50d and an inclined surface 55b of the inner flange portion 50c connected to an end of the lateral wall 55a. The lateral wall 55a may be substantially perpendicular to the inner surface 52b of the bottom 52 of the battery can 51. 'Vertical' means a case that is substantially vertical when observed with the naked eye. The recess portion 55 is formed by the shape of a caulking jig when the electrode terminal 50 is installed in the through-hole 53 of the battery can 51 by the caulking method.

Preferably, the thickness of the inner flange portion 50c may decrease as the distance from the body portion 50a of the electrode terminal 50 increases.

According to another aspect, the gasket 54 may include an outer gasket portion 54a interposed between the outer flange portion 50b and the outer surface 52a of the bottom 52 of the battery can 51 and an inner gasket portion 54b interposed between the inner flange portion 50c and the inner surface 52b of the bottom 52 of the battery can 51.

The outer gasket portion 54a and the inner gasket portion 54b may have different thicknesses depending on positions. Preferably, a region interposed between an inner edge 56 of the through-hole 53 connected with the inner surface 52b of the bottom 52 of the battery can 51 and the inner flange portion 50c in the region of the inner gasket portion 54b may have a relatively small thickness. Preferably, a minimum thickness point may exist in the gasket region interposed between the inner edge 56 of the through-hole 53 and the inner flange portion 50c. Further, the inner edge 56 of the through-hole 53 may include a facing surface 57 facing the inner flange portion 50c.

In the meantime, an upper end and a lower end of the inner wall of the through-hole 53 perpendicular to the bottom 52 of the battery can 51 may be corner-cut so as to form a surface tapered toward the electrode terminal 50. However, the upper end and/or the lower end of the inner wall of the through-hole 53 may be transformed into a smooth curved surface having a curvature. In this case, in the vicinity of the upper end and/or the lower end of the inner wall of the through-hole 53, stress applied to the gasket 54 may be more relieved.

Preferably, the inner gasket portion 54b may be extended longer than the inner flange portion 50c while forming an angle of 0° to 60° with the inner surface 52b of the bottom 52 of the battery can 51.

In another aspect, a height H1 of the flat portion 50d may be equal to or larger than a height H2 of the end of the inner gasket portion 54b based on the inner surface 52b of the bottom 52 of the battery can 51.

Further, the height H1 of the flat portion 50d may be equal to or larger than a height H3 of the end of the inner flange portion 50c based on the inner surface 52b of the bottom 52 of the battery can 51.

When the height parameters H1, H2, and H3 satisfy the foregoing conditions, the inner flange portion 50c and the inner gasket portion 54b may be prevented from interfering with other components.

In another aspect, a radius R1 from the center of the body portion 50a of the electrode terminal 50 to the edge of the outer flange portion 50b may be 10% to 60% of a radius R2 of the bottom 52 of the battery can 51.

When R1 decreases, a welding space becomes insufficient when an electric wiring component (bus bar) is welded to the electrode terminal 50. In addition, when R1 increases, a welding space is reduced when an electric wiring component (bus bar) is welded to the outer surface 52a of the bottom 52 of the battery can 51 excluding the electrode terminal 50.

When the ratio R1/R2 is adjusted between 10% and 60%, a welding space for the electrode terminal 50 and the outer surface of the bottom 52 of the battery can 51 may be properly secured.

In addition, the radius R3 from the center of the body portion 50a of the electrode terminal 50 to the edge of the flat portion 50d may be 4 to 30% based on the radius R2 of the bottom 52 of the battery can 51.

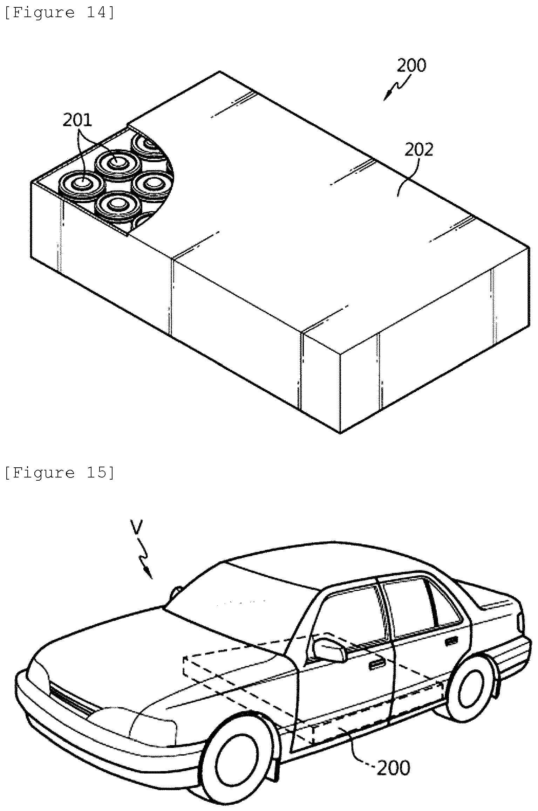

When R3 decreases, the welding space becomes insufficient when the current collector plate 79 (see FIG. 14) is welded to the flat portion 50d of the electrode terminal 50, and the welding area of the electrode terminal 50 decreases, thereby increasing contact resistance. In addition, R3 needs to be smaller than R1, and when R3 increases, the thickness of the inner flange portion 50c becomes thinner, so that the force of the inner flange portion 50c to compress the gasket 54 is weakened and thus the sealing ability of the gasket 54 may be reduced.

When R3/R2 is adjusted between 4% and 30%, the welding area between the flat portion 50d of the electrode terminal 50 and the current collector plate 79 (see FIG. 14) is sufficiently secured, so that it is possible to not only easily proceed with the welding process, but also to reduce the contact resistance of the welding region and to prevent deterioration of the sealing ability of the gasket 54.

According to the exemplary embodiment of the present invention, the riveting structure of the electrode terminal 50 may be formed by using a vertically moving caulking jig. First, a preform (not illustrated) of the electrode terminal 50 is inserted by interposing the gasket 54 to the through-hole 53 formed in the bottom 52 of the battery can 51. The preform refers to the electrode terminal before riveting.

Next, the caulking jig is inserted into an inner space of the battery can 51. The caulking jig includes a recess and a protrusion corresponding to the final shape of the electrode terminal 50 on the surface facing the preform in order to form the electrode terminal 50 by riveting the preform.

Next, the preform is transformed to the riveted electrode terminal 50 by moving the calking jig downward and press-forming the upper part of the preform.

During the pressing of the preform by the caulking jig, the outer gasket portion 54a interposed between the outer flange portion 50b and the outer surface 52a of the bottom 52 of the battery can 51 is elastically compressed and a thickness of the outer gasket portion 54a is decreased. In addition, as the region of the inner gasket portion 54b interposed between the inner edge 56 of the through-hole 53 and the preform is elastically compressed by the inner flange portion 50c, the thickness is further reduced than other areas. In particular, the region in which the thickness of the inner gasket portion 54b is intensively reduced is indicated by a dotted circle in FIG. 9. Accordingly, the sealing property between the riveted electrode terminal 50 and the battery can 51 are remarkably improved.

Preferably, the gasket 54 is compressed sufficiently to ensure a desired sealing strength without being physically damaged during riveting of the preform.

In one example, when the gasket 54 is formed of polybutylene terephthalate, the gasket 54 preferably has a compression ratio of 50% or more at the point where the gasket 54 is compressed to a minimum thickness. The compression ratio is a ratio of the thickness change before and after the compression to the thickness before compression.

In another example, when the gasket 54 is formed of polyfluoroethylene, the gasket 54 preferably has a compression ratio of 60% or more at the point where the gasket 54 is compressed to a minimum thickness.

In another example, when the gasket 54 is made of polypropylene, it is preferable that the gasket 54 has a compression ratio of 60% or more at the point where the gasket 54 is compressed to a minimum thickness.

Preferably, the press-forming of the upper part of the preform may be performed in stages by performing the vertical movement of the caulking jig at least twice or more. That is, the preform may be transformed several times by press-forming the preform in stages. In this case, the pressure applied to the caulking jig may increase in stages. In this case, stress applied to the preform is distributed several times, it is possible to prevent the gasket 54 from being damaged during the caulking process. In particular, when the region of the inner gasket portion 54b interposed between the inner edge 56 of the through-hole 53 and the preform is intensively compressed by the inner flange portion 50c, damage to the gasket is minimized.

After the pressure forming of the preform by using the caulking jig is completed, when the caulking jig is separated from the battery can 51, the riveting structure of the electrode terminal 50, not forming part of the claimed invention, may be obtained as shown in FIG. 9.

According to the exemplary embodiment, the caulking jig presses and forms the upper part of the preform through vertical movement inside the battery can 51. Depending on the case, a rotary rotating jig used in the related art may be used for press-forming the preform.

However, the rotary rotating jig rotates in a state inclined at a predetermined angle with respect to the central axis of the battery can 51. Accordingly, the rotary rotating jig having a large rotation radius may interfere with the inner wall of the battery can 51. In addition, when the depth of the battery can 51 is large, the length of the rotary rotating jig is increased as much as the depth. In this case, as the rotation radius of the end of the rotary rotating jig increases, the pressure forming of the preform may not be properly performed. Therefore, the pressure forming using the caulking jig is more effective than a method using the rotary rotating jig.

The riveting structure of the electrode terminal 50, not forming part of the claimed invention, is applicable to a battery cell.

In one example, the battery cell may include the battery can 51. The battery can may have a cylindrical shape. The size of the battery can may be diameters of the circles at both ends of 30 mm to 55 mm, and a height of 60 mm to 120 mm. Preferably, the diameter of the circle x height of the cylindrical battery can may be 46 mm x 60 mm, 46 mm x 80 mm, 46 mm x 90 mm, or 46 mm x 120 mm.

Preferably, the cylindrical battery cell may be, for example, a cylindrical battery cell in which the ratio of the form factor (defined as a value obtained by dividing the diameter of the cylindrical battery cell by the height, that is, the ratio of the diameter Φ to the height H) is greater than approximately 0.4.

Herein, the form factor means a value representing the diameter and the height of the cylindrical battery cell. The cylindrical battery cell according to an example may be, for example, 46110 cell, 48750 cell, 48110 cell, 48800 cell, 46800 cell, and 46900 cell. In the numerical value representing the form factor, the first two numbers indicate the diameter of the cell, the next two numbers indicate the height of the cell, and the last number 0 indicates that the cell has a circular cross section.

The battery cell according to an example may be a cylindrical battery cell having a substantially cylindrical shape, and having a diameter of about 46 mm, a height of about 110 mm, and a form factor ratio of 0.418.

The battery cell according to another example may be a cylindrical battery cell having a substantially cylindrical shape, and having a diameter of about 48 mm, a height of about 75 mm, and a form factor ratio of 0.640.

The battery cell according to another example may be a cylindrical battery cell having a substantially cylindrical shape, and having a diameter of about 48 mm, a height of about 110 mm, and a form factor ratio of 0.418.

The battery cell according to another example may be a cylindrical battery cell having a substantially cylindrical shape, and having a diameter of about 48 mm, a height of about 80 mm, and a form factor ratio of 0.600.

The battery cell according to another example may be a cylindrical battery cell having a substantially cylindrical shape, and having a diameter of about 46 mm, a height of about 80 mm, and a form factor ratio of 0.575.

The battery cell according to another example may be a cylindrical battery cell having a substantially cylindrical shape, and having a diameter of about 46 mm, a height of about 90 mm, and a form factor ratio of 0.511.

In the related art, the battery cells having the ratio of the form factor of about 0.4 or less have been used. That is, in the related art, for example, the 18650 cell, the 21700 cell, and the like are used. The 18650 cell has a diameter of about 18 mm, a height of about 65 mm, and a form factor ratio of 0.277. The 21700 cell has a diameter of about 21 mm, a height of about 70 mm, and a form factor ratio of 0.300.

FIG. 10 is a cross-sectional view of the battery cell 70 taken in a longitudinal direction Y according to the example.

Referring to FIG. 10, the battery cell 70 according to the example includes the electrode assembly 71 in which a first electrode plate and a second electrode plate shaped like a sheet are wound with the separation membrane interposed therebetween, and which includes an uncoated portion 72 of the first electrode plate and an uncoated portion 73 of the second electrode plate extended from both ends and exposed.

In the example, the first electrode plate may be a negative electrode plate and the second electrode plate may be a positive electrode plate. The opposite case thereof is also possible as a matter of course.

The winding method of the electrode assembly 71 is substantially the same as the winding method of the electrode assembly used in manufacturing the tab-less battery cell according to the related art described with reference to FIG. 5.

In the illustration of the electrode assembly 71, only the uncoated portions 72 and 73 that are exposed and extended to the outside of the separation membrane are illustrated in detail, and the winding structure of the first electrode plate, the second electrode plate, and the separation membrane is omitted.

The battery cell 70 also includes the battery can 51 which accommodates the electrode assembly 71 and is electrically connected with the uncoated portion 72 of the first electrode plate.

Preferably, one side (lower portion) of the battery can 51 is opened. Further, the bottom 52 of the battery can 51 has a structure in which the electrode terminal 50 is riveted in the through-hole 53 through the caulking process.

Further, the battery cell 70 may include the gasket 54 provided between the electrode terminal 50 and the outer diameter of the through-hole 53.

The battery cell 70 may include the sealing body 74 sealing the opened end of the battery can 51 so as to be insulated from the battery can 51. Preferably, the sealing body 74 may include a cap plate 74a having no polarity and a sealing gasket 74b interposed between an edge of the cap plate 74a and the opened end of the battery can 51.

The cap plate 74a may be made of a conductive metal material, such as aluminum, steel, or nickel. Further, the sealing gasket 74b may be made of polypropylene, polybutylene terephthalate, polyethylene fluoride, or the like having insulating property and elasticity. However, the present invention is not limited by the materials of the cap plate 74a and the sealing gasket 74b.

The cap plate 74a may include a vent notch 77 that ruptures when the pressure inside the battery can 51 exceeds a threshold. The vent notch 77 may be formed on both surfaces of the cap plate 74a. The vent notches 77 may form a continuous or discontinuous circular pattern, a straight pattern, or any other pattern on the surface of the cap plate 74a.

The battery can 51 may include a crimping portion 75 extended and bent toward the inside of the battery can 51 to wrap and fix the edge of the cap plate 74a together with the sealing gasket 74b in order to fix the sealing body 74.

The battery can 51 may also include a beading portion 76 pressed into the inside of the battery can 51 in a region adjacent the opened end. The beading portion 764 supports the edge of the sealing body 74, in particular, the outer peripheral surface of the sealing gasket 74b, when the sealing body 74 is fixed by the crimping portion 75.

The battery cell 70 may further include a first current collector plate 78 welded to the uncoated portion 72 of the first electrode plate. The first current collector plate 78 is made of a conductive metal material, such as aluminum, steel, or nickel. Preferably, at least a portion 78a of an edge of the first current collector plate 78 that is not in contact with the uncoated portion 72 of the first electrode plate may be interposed between the beading portion 76 and the sealing gasket 74b and fixed by the crimping portion 75. Optionally, at least a portion 78a of the edge of the first current collector plate 78 may be fixed through the welding to an inner peripheral surface 76a of the beading portion 76 adjacent to the crimping portion 75.

The battery cell 70 may also include the second current collector plate 79 welded to the uncoated portion 73 of the second electrode plate. Preferably, at least a portion 79a of the second current collector plate 79, for example, the center portion 79a, may be welded to the flat portion 50a of the electrode terminal 50.

Preferably, when the second current collector plate 79 is welded, the welding tool is inserted through the winding center 80 present in the core of the electrode assembly 71 to reach the welding point of the second current collector plate 79. In addition, when the second current collector plate 79 is welded to the flat portion 50d of the electrode terminal 50, the electrode terminal 50 supports the welding region of the second current collector plate 79, so that a strong pressure is applied to the welding region to improve the welding quality. In addition, since the flat portion 50d of the electrode terminal 50 has a large area, a wide welding area may also be secured. Accordingly, it is possible to lower the internal resistance of the battery cell 70 by lowering the contact resistance of the welding region. The face-to-face welding structure of the riveted electrode terminal 50 and the second current collector plate 79 is very useful for rapid charging using a high c-rate current. This is because the current density per unit area may be lowered in the cross section in the direction in which the current flows, so that the amount of heat generated in the current path may be lower than that of the related art.

When the flat portion 50d of the electrode terminal 50 is welded to the second current collector plate 79, any one of laser welding, ultrasonic welding, spot welding, and resistance welding may be used. The area of the flat portion 50d may be adjusted differently depending on the welding method, but is preferably 2 mm or more for welding strength and ease of the welding process.

In one example, when the flat portion 50d and the second current collector plate 79 are welded with a laser and are welded in a continuous or discontinuous line in the form of a circular pattern, the diameter of the flat portion 50d is preferably 4 mm or more. When the diameter of the flat portion 50d satisfies the corresponding conditions, it is possible to secure welding strength, and there is no difficulty in proceeding with the welding process by inserting the laser welding tool into the winding center 80 of the electrode assembly 71.

In another example, when the flat portion 50d and the second current collector plate 79 are ultrasonically welded and are welded in a circular pattern, the diameter of the flat portion 50d is preferably 2 mm or more. When the diameter of the flat portion 50d satisfies the corresponding conditions, it is possible to secure welding strength, and there is no difficulty in proceeding with the welding process by inserting the ultrasonic welding tool into the winding center 80 of the electrode assembly 71.

The battery cell 70 may further include an insulating cap 80'. The insulating cap 80' may be interposed between the second current collector plate 79 and the inner surface 52a of the bottom 52 of the battery can 51, and the inner peripheral surface 51a of the lateral wall of the battery can 51 and the electrode assembly 71. Preferably, the insulating cap 80' includes a welding hole 80a exposing the flat portion 50d of the electrode terminal 50 toward the second current collector plate 79, and may cover the surface of the second current collector plate 79 and one (upper portion) edge of the electrode assembly 71.

Preferably, the uncoated portions 72 and 73 of the first electrode plate and/or the second electrode plate are bent from the outer periphery side of the electrode assembly 71 to the core side to form curved surfaces on the upper and lower portions of the electrode assembly 71. In addition, the first current collector plate 78 may be welded to the curved surface formed while the uncoated portion 72 of the first electrode plate is bent, and the second current collector plate 79 may be welded to the curved surface formed while the uncoated portion 73 of the second electrode plate is bent.

In order to relieve stress generated when the uncoated portions 72 and 73 are bent, the first electrode plate and/or the second electrode plate may have an improved structure different from that of the electrode plate in the related art (refer to FIG. 4).

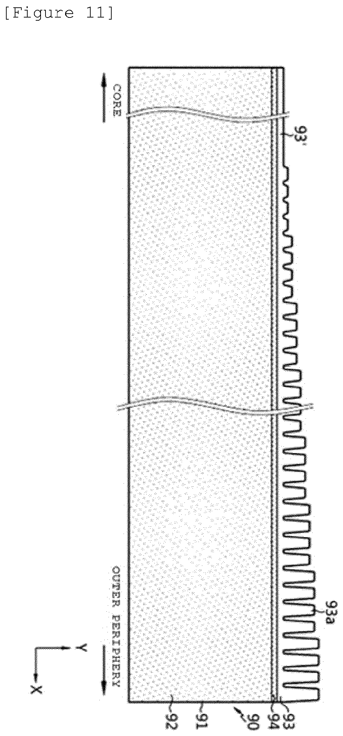

FIG. 11 is a top plan view illustrating an example of a structure of an electrode plate 90 according to the example.

Referring to FIG. 11, the electrode plate 90 includes a sheet-shaped current collector 91 made of a conductive foil, and an active material layer 92 formed on at least one surface of the current collector 91, and an uncoated portion 93 which is not coated with the active material on an end of a long side of the current collector 91.

Preferably, the uncoated portion 93 may include a plurality of notching-processed segment pieces 93a. The plurality of segment pieces 93a form a plurality of groups, and the segment pieces 93a belonging to each group may have the same height (length in the Y direction) and/or width (length in the X direction) and/or spacing pitch. The number of segment pieces 93a belonging to each group may be increased or decreased than illustrated. The segment piece 93a may have a trapezoidal shape, and may be transformed into a quadrangular shape, a flat quadrilateral shape, a semi-circular shape, or a semi-elliptical shape.

Preferably, the height of the segment piece 93a may be increased step by step from the core side to the outer peripheral side. Also, a core-side uncoated portion 93' adjacent to the core side may not include the segment piece 93a, and the height of the core-side uncoated portion 93' may be smaller than those of other uncoated portion regions.

Optionally, the electrode plate 90 may include an insulating coating layer 94 covering the boundary between the active material layer 92 and the uncoated portion 93. The insulating coating layer 94 includes an insulating polymer resin, and may optionally further include an inorganic filler. The insulating coating layer 94 prevents the end of the active material layer 92 from coming into contact with the active material layer having a facing opposite polarity through the separation membrane, and serves to structurally support the bending of the segment piece 93a. To this end, when the electrode plate 90 is wound as the electrode assembly, it is preferable that at least a portion of the insulating coating layer 94 is exposed to the outside from the separation membrane.

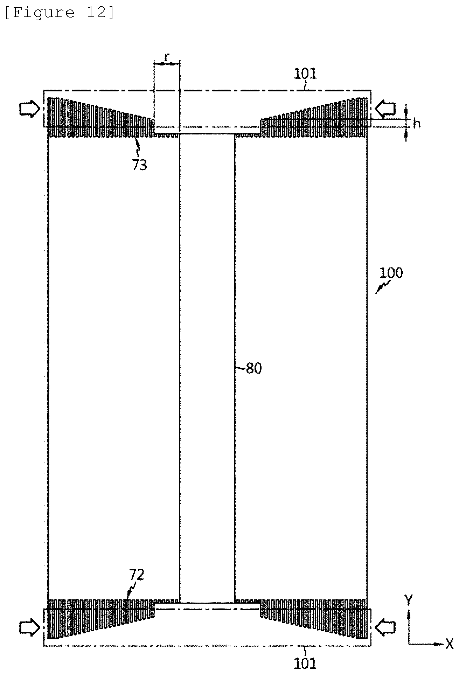

FIG. 12 is a cross-sectional view of the electrode assembly 100 in which an uncoated portion segmental structure of the electrode plate 90 is applied to the first electrode plate and the second electrode plate taken in the longitudinal direction Y according to the example.

Referring to FIG. 12, the electrode assembly 100 may be manufactured by the winding method described with reference to FIG. 5. For convenience of description, the protrusion structure of the uncoated portions 72 and 73 extending outside the separation membrane will be illustrated in detail, and the winding structure of the first electrode plate, the second electrode plate, and the separation membrane will be omitted. The uncoated portion 72 protruding downwardly extends from the first electrode plate, and the uncoated portion 73 protruding upwardly extends from the second electrode plate.

A pattern in which the heights of the uncoated portions 72 and 73 change is schematically illustrated. That is, the heights of the uncoated portions 72 and 73 may vary irregularly depending on the position at which the cross-section is cut. For example, when the side portion of the trapezoidal segment piece 93a is cut, the height of the uncoated portion in the cross section is smaller than the height of the segment piece 93a. Therefore, it should be understood that the heights of the uncoated portions 72 and 73 illustrated in the drawing showing the cross-section of the electrode assembly 100 correspond to the average of the heights of the uncoated portions included in each winding turn.

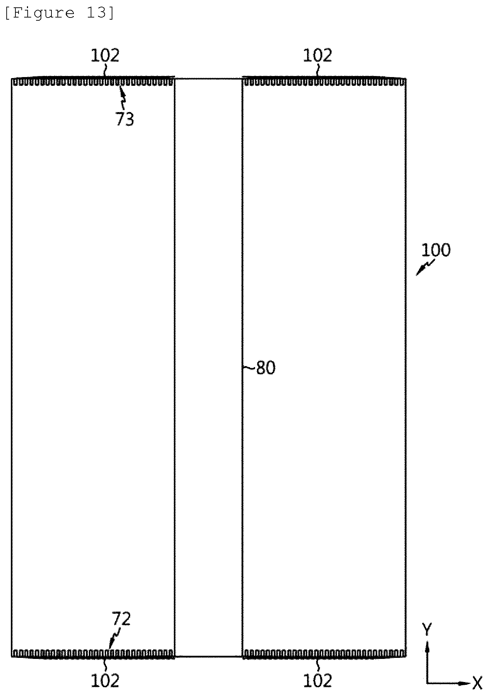

The uncoated portions 72 and 73 may be bent from the outer peripheral side of the electrode assembly 100 toward the core side as illustrated in FIG. 13. In FIG. 12, the bent portion 101 is indicated by a dotted line box. When the uncoated portions 72 and 73 are bent, curved surfaces 102 are formed on the upper and lower portions of the electrode assembly 100 while radially adjacent segment pieces overlap each other in multiple layers. At this time, the core-side uncoated portion 93' in FIG. 11 is not bent due to the low height, and the height h of the innermost bent segment piece is less than or equal to the radial length r of the winding region formed by the core-side uncoated portion 93' having no segment piece structure. Accordingly, the winding center 80 in the core of the electrode assembly 100 is not closed by the bent segment pieces. When the winding center 80 is not closed, there is no difficulty in the electrolyte injection process, and the electrolyte injection efficiency is improved. In addition, by inserting a welding tool through the winding center 80 , the electrode terminal 50 and the second current collector plate 79 may be easily welded.

In the battery cell 70 according to the example, the cap plate 74a of the sealing body 74 has no polarity. Instead, the first current collector plate 78 is connected to the lateral wall of the battery can 51, so that the outer surface 52a of the bottom 52 of the battery can 51 has a polarity opposite to that of the electrode terminal 50. Accordingly, when a plurality of cells is to be connected in series and/or in parallel, wiring, such as a bus bar connection, may be performed on the upper portion of the battery cell 70 using the outer surface 52a of the bottom 52 of the battery can 51 and the electrode terminal 50. Through this, the energy density can be improved by increasing the number of cells that may be mounted in the same space.

In the present invention, the positive electrode active material coated on the positive electrode plate and the negative electrode active material coated on the negative electrode plate may be used without limitation as long as the active material is known in the art.

In one example, the positive electrode active material may include an alkali metal compound represented by the general chemical formula A[AₓM_{y}]O_{2+z} (A includes at least one element among Li, Na, and K; M includes at least one element selected from Ni, Co, Mn, Ca, Mg, Al, Ti, Si, Fe, Mo, V, Zr, Zn, Cu, Al, Mo, Sc, Zr, Ru, and Cr; x ≥ 0, 1 ≤ x+y ≤ 2, -0.1 ≤ z ≤ 2; the stoichiometric modulus of the elements contained in x, y, z and M are chosen such that the compound remains electrically neutral).

In another example, the positive electrode active material may be the alkali metal compound xLiM¹O₂-(1-x)Li₂M²O₃ (M¹ includes at least one element having an average oxidation state 3; M² includes at least one element having an average oxidation state 4; 0≤ x ≤ 1) disclosed in US6,677,082, US6,680,143, and the like.

In another example, the positive electrode active material may be lithium metal phosphate represented by the general chemical formula LiaM¹xFe₁-xM²yP₁-yM³zO_{4-z} (M¹ includes at least one element selected from Ti, Si, Mn, Co, Fe, V, Cr, Mo, Ni, Nd, Al, Mg, and Al; M² includes at least one element selected from Ti, Si, Mn, Co, Fe, V, Cr, Mo, Ni, Nd, Al, Mg, Al, As, Sb, Si, Ge, V, and S; M³ includes a halogen-group element selectively including F; 0 < a ≤ 2, 0 ≤ x ≤ 1, 0 ≤ y < 1, 0 ≤ z < 1; the stoichiometric modulus of the elements contained in a, x, y, z, M¹, M², and M³ are chosen such that the compound remains electrically neutral), or Li₃M₂(PO₄)₃ (M includes at least one element selected from Ti, Si, Mn, Fe, Co, V, Cr, Mo, Ni, Al, Mg, and Al).

Preferably, the positive electrode active material may include primary particles and/or secondary particles in which the primary particles are aggregated.

In one example, the negative electrode active material may be a carbon material, lithium metal or lithium metal compound, silicon or silicon compound, tin or tin compound. Metal oxides, such as TiO₂ and SnO₂, with a potential of less than 2V may also be used as the negative electrode active material. As the carbon material, low crystalline carbon, high crystalline carbon, and the like may all be used.

As the separation membrane, a porous polymer film, for example, a porous polymer film made of a polyolefin-based polymer, such as an ethylene homopolymer, a propylene homopolymer, an ethylene/butene copolymer, an ethylene/hexene copolymer, or an ethylene/methacrylate copolymer may be used solely or may be stacked and used. As another example, the separation membrane may be a typical porous nonwoven fabric, for example, a nonwoven fabric made of high melting point glass fiber, polyethylene terephthalate fiber, or the like.

At least one surface of the separation membrane may include a coating layer of inorganic particles.

Further, it is also possible that the separation membrane itself is made of a coating layer of inorganic particles. The particles constituting the coating layer may have a structure bound to a binder so that an interstitial volume exists between adjacent particles.

The inorganic particles may be made of an inorganic material having a dielectric constant of 5 or more. As a non-limited example, the inorganic particle may include at least one material selected from the group consisting of Pb (Zr, Ti)O₃(PZT), Pb_{1-xL}aₓZr_{1-y}Ti_{y}O₃(PLZT), PB(Mg₃Nb_{2/3})O₃-PbTiO₃(PMN-PT), BaTiO₃, hafnia(HfO₂), SrTiO₃, TiO₂, Al₂O₃, ZrO₂, SnO₂, CeO₂, MgO, CaO, ZnO, and Y₂O₃.

The electrolyte may be a salt having a structure, such as A⁺B⁻. Herein, A⁺ includes an ion composed of an alkali metal positive ion, such as Li⁺, Na⁺, and K⁺, or a combination thereof. Further, B⁻ includes one or more negative ions selected from the group consisting of F⁻, Cl⁻, Br⁻, I⁻, NO₃⁻, N(CN)₂⁻, BF₄⁻, ClO₄⁻, AlO₄⁻, AlCl₄⁻, PF₆⁻, SbF₆⁻, AsF₆⁻, BF₂C₂O₄⁻, BC₄O₈⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, C₄F₉SO₃⁻, CF₃CF₂SO₃⁻, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻.

Further, the electrolyte may be dissolved in an organic solvent and used. As the organic solvent, propylene carbonate (PC), ethylenecarbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethyl methyl carbonate (EMC), and ybutyrolactone, or a mixture thereof may be used.

Another example provides a battery pack including at least one battery cell described above.

The cylindrical battery cell according to the exemplary embodiment of the present invention may be used for manufacturing the battery pack.

FIG. 14 is a diagram schematically illustrating a configuration of a battery pack according to an example.

Referring to FIG. 14, a battery pack 200 according to example includes an assembly in which cylindrical battery cells 201 are electrically connected and a pack housing 202 accommodating the assembly. The cylindrical battery cell 201 is the battery cell according to the exemplary embodiment. In the drawings, components, such as a bus bar, a cooling unit, and an external terminal, for electrical connection of the cylindrical battery cells 201 are omitted for convenience of illustration.

Another example provides a vehicle including at least one battery pack described above.

The battery pack 200 may be mounted to the vehicle. An example of the vehicle includes an electric vehicle, a hybrid vehicle, or a plug-in hybrid vehicle. The vehicle includes a four-wheeled vehicle or a two-wheeled vehicle.

FIG. 15 is a diagram illustrating a vehicle including the battery pack 200 of FIG. 14.

Referring to FIG. 15, a vehicle V according to an example includes the battery pack 200 according to the example. The vehicle V is operated by receiving power from the battery pack 200 according to the example.

While this invention has been described in connection with the limited exemplary embodiments and drawings, the invention is not limited thereto, and it is obvious that various changes and modifications within the technical aspects of the present invention and the scope equivalent to the scope of the appended claims, which solely define the invention, may be made by those skilled in the art.

## Claims

1. An electrode assembly (1, 71, 100) comprising:
a first electrode (2), a separation membrane (4, 5), and a second electrode (3) stacked and wound,
wherein at least one of the first electrode (2) and the second electrode (3) includes a current collector (91) and an electrode active material layer (92) provided on the current collector (91),
wherein the first electrode (2) includes a fixing part (7) on the electrode active material layer (92), provided to an edge portion (6) closest to a winding center (80) of the electrode assembly, and is fixed to at least a part of the separation membrane (4, 5), and
wherein an edge portion of the current collector (91) provided at one end of a winding axis of the electrode assembly includes an uncoated portion (8) in which the electrode active material layer (92) is not provided.

2. The electrode assembly of claim 1, wherein the separation membrane (4, 5) includes a first separation membrane (4) provided between the first electrode (2) and the second electrode (3), and a second separation membrane (5) provided to a surface opposite to a surface facing the first separation membrane (4) of the first electrode (2), and
wherein at least one of the first separation membrane (4) and the second separation membrane (5) is fixed to the fixing part (7).

3. The electrode assembly of claim ₁, wherein the fixing part (7) does not overlap the second electrode (3) in an unwinding state of the electrode assembly (1).

4. The electrode assembly of claim 1, wherein the fixing part (7) has a width (7W) of 12 mm or less.

5. The electrode assembly of claim 1, wherein in a portion except for the fixing part (7), the first electrode (2), the separation membrane (4, 5), and the second electrode (3) are not fixed.

6. The electrode assembly of claim 1, wherein the first electrode (2) is a negative electrode and the second electrode (3) is a positive electrode.

7. The electrode assembly of claim 1, wherein the fixing part (7) is a lamination tape.

8. The electrode assembly of claim 7, wherein a heat decomposition temperature of the lamination tape is 180°C or higher.

9. The electrode assembly of claim 7, wherein the lamination tape has adhesive force at 40°C or higher.

10. The electrode assembly of claim 1, wherein the fixing part (7) is fixed to at least a part of the separation membrane (4, 5) at two points provided at edge portions facing each other in a winding axis direction of the electrode assembly, and one point provided between the two points.

11. The electrode assembly of claim 1, wherein the fixing part (7) is fixed to the separation membrane (4, 5) by 40% or more of a length of the electrode assembly in a winding axis direction.

12. A battery cell (70, 201), comprising:
the electrode assembly (1, 71, 100) according to any one of claims 1 to 11;
a battery can (51) which accommodates the electrode assembly (1, 71, 100) and has an opening at one side;
an electrode terminal (50) riveted through a through-hole (53) formed in a bottom (52) of the battery can (51);
a gasket (54) provided between the electrode terminal (50) and an outer diameter of the through-hole (53); and
a sealing body (74) sealing the opening of the battery can (51).

## Patentansprüche

1. Elektrodenanordnung (1, 71, 100), aufweisend:
eine erste Elektrode (2), eine Separatormembran (4, 5) und eine zweite Elektrode (3), die gestapelt und gewickelt sind,
wobei mindestens eine von der ersten Elektrode (2) und der zweiten Elektrode (3) einen Stromkollektor (91) und eine auf dem Stromkollektor (91) vorgesehene Elektrodenaktivmaterialschicht (92) aufweist,
wobei die erste Elektrode (2) einen Fixierabschnitt (7) auf der Elektrodenaktivmaterialschicht (92) aufweist, der an einem Randabschnitt (6), der einem Wicklungszentrum (80) der Elektrodenanordnung am nächsten liegt, vorgesehen ist und an mindestens einem Teil der Separatormembran (4, 5) fixiert ist, und
wobei ein Randabschnitt des Stromkollektors (91), der an einem Ende einer Wicklungsachse der Elektrodenanordnung vorgesehen ist, einen unbeschichteten Abschnitt (8) aufweist, in dem die Elektrodenaktivmaterialschicht (92) nicht vorgesehen ist.

2. Elektrodenanordnung nach Anspruch 1, wobei die Separatormembran (4, 5) eine erste Separatormembran (4), die zwischen der ersten Elektrode (2) und der zweiten Elektrode (3) vorgesehen ist, und eine zweite Separatormembran (5) aufweist, die an einer Oberfläche der ersten Elektrode (2) vorgesehen ist, die einer der ersten Separatormembran (4) zugewandten Oberfläche gegenüberliegt, und
wobei mindestens eine von der ersten Separatormembran (4) und der zweiten Separatormembran (5) an dem Fixierabschnitt (7) fixiert ist.

3. Elektrodenanordnung nach Anspruch 1, wobei der Fixierabschnitt (7) in einem abgewickelten Zustand der Elektrodenanordnung (1) die zweite Elektrode (3) nicht überlappt.

4. Elektrodenanordnung nach Anspruch 1, wobei der Fixierabschnitt (7) eine Breite (7W) von 12 mm oder weniger aufweist.

5. Elektrodenanordnung nach Anspruch 1, wobei in einem Abschnitt mit Ausnahme des Fixierabschnitts (7) die erste Elektrode (2), die Separatormembran (4, 5) und die zweite Elektrode (3) nicht fixiert sind.

6. Elektrodenanordnung nach Anspruch 1, wobei die erste Elektrode (2) eine negative Elektrode und die zweite Elektrode (3) eine positive Elektrode ist.

7. Elektrodenanordnung nach Anspruch 1, wobei der Fixierabschnitt (7) ein Laminierband ist.

8. Elektrodenanordnung nach Anspruch 7, wobei eine thermische Zersetzungstemperatur des Laminierbands 180 °C oder höher ist.

9. Elektrodenanordnung nach Anspruch 7, wobei das Laminierband bei 40 °C oder höher eine Haftkraft aufweist.

10. Elektrodenanordnung nach Anspruch 1, wobei der Fixierabschnitt (7) an mindestens einem Teil der Separatormembran (4, 5) an zwei Punkten, die an in einer Wicklungsachsenrichtung der Elektrodenanordnung einander gegenüberliegenden Randabschnitten vorgesehen sind, und an einem zwischen den zwei Punkten vorgesehenen Punkt fixiert ist.

11. Elektrodenanordnung nach Anspruch 1, wobei der Fixierabschnitt (7) über einen Anteil von 40 % oder mehr einer Länge der Elektrodenanordnung in einer Wicklungsachsenrichtung an der Separatormembran (4, 5) fixiert ist.

12. Batteriezelle (70, 201), aufweisend:
die Elektrodenanordnung (1, 71, 100) nach einem der Ansprüche 1 bis 11;
eine Batteriedose (51), die die Elektrodenanordnung (1, 71, 100) aufnimmt und an einer Seite eine Öffnung aufweist;
einen Elektrodenanschluss (50), der durch ein in einem Boden (52) der Batteriedose (51) ausgebildetes Durchgangsloch (53) vernietet ist;
eine Dichtung (54), die zwischen dem Elektrodenanschluss (50) und einem Außendurchmesser des Durchgangslochs (53) vorgesehen ist; und
einen Dichtungskörper (74), der die Öffnung der Batteriedose (51) abdichtet.

## Revendications

1. Ensemble électrode (1, 71, 100) comprenant :
une première électrode (2), une membrane de séparation (4, 5), et une deuxième électrode (3) empilées et enroulées,
dans lequel au moins une électrode parmi la première électrode (2) et la deuxième électrode (3) inclut un collecteur de courant (91) et une couche de matériau actif d'électrode (92) prévue sur le collecteur de courant (91),
dans lequel la première électrode (2) inclut une pièce de fixation (7) sur la couche de matériau actif d'électrode (92), prévue sur une portion de bord (6) située le plus près d'un centre d'enroulement (80) de l'ensemble électrode, et est fixée sur au moins une partie de la membrane de séparation (4, 5), et
dans lequel une portion de bord du collecteur de courant (91) prévue au niveau d'une extrémité d'un axe d'enroulement de l'ensemble électrode inclut une portion non enrobée (8) dans laquelle la couche de matériau actif d'électrode (92) n'est pas prévue.

2. Ensemble électrode de la revendication 1, dans lequel la membrane de séparation (4, 5) inclut une première membrane de séparation (4) prévue entre la première électrode (2) et la deuxième électrode (3), et une deuxième membrane de séparation (5) prévue sur une surface opposée à une surface faisant face à la première membrane de séparation (4) de la première électrode (2), et
dans lequel au moins une membrane parmi la première membrane de séparation (4) et la deuxième membrane de séparation (5) est fixée à la pièce de fixation (7).

3. Ensemble électrode de la revendication 1, dans lequel la pièce de fixation (7) n'est pas en chevauchement avec la deuxième électrode (3) dans un état de déroulement de l'ensemble électrode (1).

4. Ensemble électrode de la revendication 1, dans lequel la pièce de fixation (7) a une largeur (7W) de 12 mm ou moins.

5. Ensemble électrode de la revendication 1, dans lequel dans une portion à l'exception de la pièce de fixation (7), la première électrode (2), la membrane de séparation (4, 5), et la deuxième électrode (3) ne sont pas fixées.

6. Ensemble électrode de la revendication 1, dans lequel la première électrode (2) est une électrode négative et la deuxième électrode (3) est une électrode positive.

7. Ensemble électrode de la revendication 1, dans lequel la pièce de fixation (7) est une bande de stratification.

8. Ensemble électrode de la revendication 7, dans lequel une température de décomposition par la chaleur de la bande de stratification est de 180 °C ou plus.

9. Ensemble électrode de la revendication 7, dans lequel la bande de stratification a une force adhésive à 40 °C ou plus.

10. Ensemble électrode de la revendication 1, dans lequel la pièce de fixation (7) est fixée à au moins une partie de la membrane de séparation (4, 5) à deux points prévus à des portions de bord se faisant face l'une l'autre dans une direction de l'axe d'enroulement de l'ensemble électrode, et un point prévu entre les deux points.

11. Ensemble électrode de la revendication 1, dans lequel la pièce de fixation (7) est fixée à la membrane de séparation (4, 5) à 40 % ou plus d'une longueur de l'ensemble électrode dans une direction de l'axe d'enroulement.

12. Cellule de batterie (70, 201), comprenant :
l' ensemble électrode (1, 71, 100) selon n'importe laquelle des revendications 1 à 11 ;
un boîtier de batterie (51) qui reçoit l'ensemble électrode (1, 71, 100) et a une ouverture au niveau d'un côté ;
une borne d'électrode (50) rivetée à travers un trou traversant (53) formé dans un fond (52) du boîtier de batterie (51) ;
un joint (54) prévu entre la borne d'électrode (50) et un diamètre externe du trou traversant (53) ; et
un corps d'étanchéisation (74) qui étanchéifie l'ouverture du boîtier de batterie (51).
